# EUROPÄISCHE PATENTANMELDUNG

(11) **EP 0 728 566 A1**
(43) Veröffentlichungstag der Anmeldung: **28.08.1996**
(21) Anmeldenummer: 96102254.8
(22) Anmeldetag: 15.02.1996
(51) Int. Cl.: B29C 44/38, B29B 7/74, F16K 15/04

(54) **Ventil für den Verschluss auszuschäumender Hohlräume**

(30) Priorität: 21.02.1995 DE 19505937
(71) Anmelder: MASCHINENFABRIK HENNECKE GmbH, D-51379 Leverkusen (DE)
(72) Erfinder: Alper, Edmund, D-53797 Lohmar (DE)
(74) Vertreter: Drope, Rüdiger, Dr.

(57) **Zusammenfassung**

Es wird ein Ventil für den Verschluß auszuschäumender Hohlräume nach Einleiten einer verschäumbaren, aus mindestens zwei Komponenten bestehenden Reaktivmischung mit folgenden Merkmalen beschrieben:
a) das Ventil (1) ist innerhalb des Hohlraumes (2) angeordnet und steht in in Kontakt mit mindestens einer Begrenzungswände (3,4) des Hohlraums (2);
b) das Ventil (1) weist zwei im wesentlichen rotationssymmetrische koaxiale Käfige (11,12) auf, wobei der innere Käfig (11) eine axiale Öffnung (15) zur Einleitung der Reaktivmischung und mindestens zwei radiale Öffnungen (13) für den Durchtritt der Reaktivmischung in den zwischen innerem und äußerem Käfig gebildeten Ringraum aufweist;
c) der innere Käfig (11) weist ferner eine in diesem frei bewegliche Kugel (16) auf, die nach Beendigung des Einleitens der Reaktivmischung die Einleitöffnung (15) verschließt;
d) auf der der Einleitöffnung (15) gegenüberliegenden Seite weist der innere Käfig (11) eine nach innen gerichtete Wölbung derart auf, daß die Kugel während des Einleitens der Reaktivmischung eine Position außerhalb der Käfigachse einnimmt;
und
e) der äußere Käfig (12) weist radiale Durchtrittsöffnungen (14) zum Hohlraum (2) hin auf, wobei sich der freie Querschnitt von Eintrittsöffnung, Summe der Durchtrittsöffnungen des inneren Käfigs (11) und Summe der Durchtrittsöffnungen des äußeren Käfigs (12) jeweils mindestens verdoppelt.

## Beschreibung

Die vorliegende Erfindung betrifft ein Ventil für die Einleitung einer verschäumbaren, aus mindestens zwei Komponenten bestehenden Reaktivmischung in auszuschäumende Hohlräume, insbesondere Kühlschrankgehäuse, sowie deren Verschluß nach Einleitung der verschäumbaren Reaktivmischung.

Derartige Ventile sind z.B. aus der EP-A 289 764 bekannt.

Derartige Ventile haben eine mehrfache Funktion. Einerseits dienen sie der Laminarisierung und Geschwindigkeitsreduktion der Strömung der mit hoher Geschwindigkeit in den Hohlraum eingespritzten Reaktivmischung, so daß diese sich in dem Hohlraum gleichmäßig ausbreiten kann, ohne unerwünschte Gaseinschlüsse zu bewirken.

Zur Lösung dieser Aufgaben wird ein Ventil vorgeschlagen, das folgende Merkmale aufweist:
a) das Ventil ist innerhalb des Hohlraumes angeordnet und steht in Kontakt mit mindestens einer der Begrenzungswände des Hohlraums;
b) das Ventil weist zwei im wesentlichen rotationssymmetrische koaxiale Käfige auf, wobei der innere Käfig eine axiale Öffnung zur Einleitung der Reaktivmischung und mindestens zwei radiale Öffnungen für den Durchtritt der Reaktivmischung in den zwischen innerem und äußerem Käfig gebildeten Ringraum aufweist;
c) der innere Käfig weist ferner eine in diesem frei bewegliche Kugel auf, die nach Beendigung des Einleitens der Reaktivmischung die Einleitöffnung verschließt;
d) auf der der Einleitöffnung gegenüberliegenden Seite weist der innere Käfig eine nach innen gerichtete Wölbung derart auf daß die Kugel während des Einleitens der Reaktivmischung eine Position außerhalb der Käfigachse einnimmt;
und
e) der äußere Käfig weist mindestens eine radiale Durchtrittsöffnung zum Hohlraum auf, wobei sich der freie Querschnitt von Eintrittsöffnung, Summe der Durchtrittsöffnungen des inneren Käfigs und Summe der Durchtrittsöffnungen des äußeren Käfigs in Strömungsrichtung jeweils mindestens verdoppelt.

Vorzugsweise beträgt der freie Querschnitt der Summe der radialen Durchtrittsöffnungen des inneren Käfigs das 2- bis 6-fache des freien Querschnitts der Eintrittsöffnung. Der freie Querschnitt der Summe der radialen Durchtrittsöffnungen des äußeren Käfigs beträgt vorzugsweise das 2- bis 8-fache des freien Querschnitts der Summe der radialen Durchtrittsöffnungen des inneren Käfigs, vorzugsweise das 4- bis 8-fache.

Vorzugsweise werden die radialen Durchtrittsöffnungen des inneren Käfigs und des äußeren Käfigs so angeordnet, daß diese von der Reaktivmischung unter mindestens 2-facher Umlenkung durchströmt werden.

Durch die Umlenkung der Strömung im Ringraum zwischen den Ventilkäfigen unter gleichzeitiger Vergrößerung des freien Strömungsquerschnitts erfolgt ein effektiver Turbulenzabbau unter gleichzeitiger Reduktion der Strömungsgeschwindigkeit in der strömenden Reaktivmischung.

Nach einer besonders bevorzugten Ausführung der vorliegenden Erfindung werden die Durchtrittsöffnungen des äußeren Käfigs in Form von Strömungskanälen ausgebildet, deren Länge in Strömungsrichtung mindestens deren kürzester Querschnittsabmessung entspricht.

Die Erfindung wird anhand der beigefügten Figuren näher erläutert:
- Fig. 1: zeigt die prinzipielle Anordnung zur Ausschäumung eines Kühlschrankgehäuses.
- Fig. 2, 3 und 4: zeigen einen axialen Querschnitt durch das erfindungsgemäße Ventil in drei verschiedenen Betriebszuständen.
- Fig. 5: zeigt einen Querschnitt senkrecht zur Ventilachse in der Ebene der Einlaßöffnung im Betriebszustand der Fig. 3.

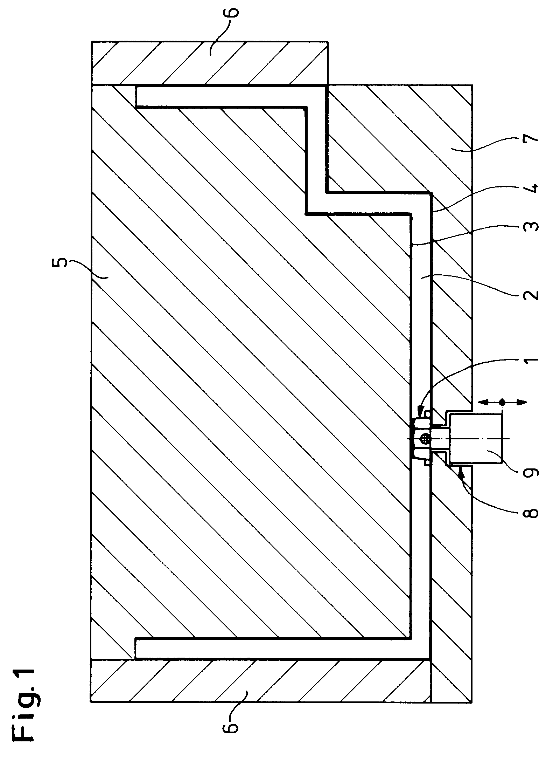

Fig. 1 zeigt ein erfindungsgemäßes Ventil 1, das innerhalb des Hohlraumes 2 zwischen dem Innengehäuse 3 und dem Außengehäuse 4 eines Kühlschranks angeordnet ist. Zur Vermeidung der Deformation des Kühlschränkgehäuses 3, 4 durch den beim Ausschäumen auftretenden Schäumdruck wird das Kühlschrankgehäuse in an sich bekannter Weise in ein Stützgehäuse, bestehend aus einem Stützkern 5, Seitenplatten 6 und einer Bodenplatte 7, die geeignet sind den Schäumdruck aufzufangen, eingelegt. Die Bodenplatte 7 weist eine Öffnung 8 auf, durch die der Mischkopf 9, in dem die Komponenten der zu verschäumenden Reaktivmischung vermischt werden, eingeführt und gegen die Ventileinlaßöffnung gedrückt wird. Vorzugsweise wird eine Polyurethan-Reaktivmischung, die entsprechende Treibmittel enthält, verschäumt. Die Technik der Herstellung verschäumbarer Polyurethan-Reaktivmischungen ist an sich bekannt (siehe Becker/Braun, Kunststoffhandbund, Band 7: Polyurethane, Carl Hanser Verlag, München, Wien 1993, Seite 174 ff.).

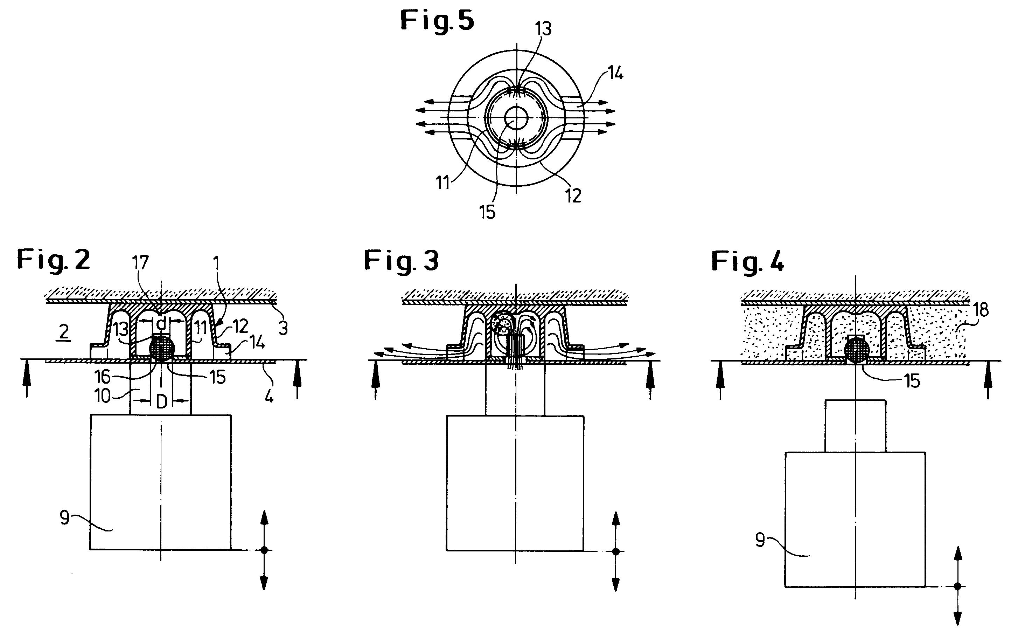

Fig. 2 zeigt das erfindungsgemäße Ventil 1 mit Mischkopf 9 in gegenüber Fig. 1 vergrößerter Darstellung. Gleiche Bezugszeichen wie in Fig. 1 bezeichnen gleiche Elemente. Das Ventil 1 besteht aus einem inneren Käfig 11 und einem äußeren Käfig 12 mit radialen Durchtrittsöffnungen durch den inneren Käfig 13 und durch den äußeren Käfig 14, sowie der axialen Einlaßöffnung 15 in den inneren Käfig 11. Innerhalb des inneren Käfigs 11 befindet sich die Verschlußkugel 16, deren Durchmesser größer ist als der Durchmesser der Einlaßöffnung 15 (D) und als die geringste Querschnittsabmessung der radialen Durchlaßöffnung 13 (d), so daß die Kugel 16 nicht aus dem inneren Käfig austreten kann. Ferner weist der innere Käfig 11 auf der der Eintrittsöffnung 15 gegenüberliegenden Seite eine nach innen gerichtete Wölbung 17 auf, so daß die Kugel 16 unter dem Druck der einströmenden Reaktivmischung eine Position außerhalb der Ventilachse einnimmt (Fig. 3). In der dargestellten Ausführungsform ist ferner die radiale Durchtrittsöffnung 14 durch den äußeren Käfig 12 in Form eines Strömungskanals ausgebildet.

Zur Durchführung des Ausschäumens eines Kühlschrankgehäuses wird nun das Ventil 1 zunächst auf der Innenseite des Kühlschrank-Außengehäuses über einer Bohrung im Außengehäuse, die der Einlaßöffnung 15 des Ventils entspricht, fixiert. Sofern die Abmessung des Ventils 1 in Achsenrichtung dem Abstand zwischen Außengehäuse 4 und Außengehäuse 3 entspricht, kann die Fixierung z.B. durch Doppelklebeband oder ähnliches erfolgen. Das Kühlschrankaußengehäuse wird dann auf die Bodenplatte 7 (Fig. 1) aufgelegt, das Kühlschrankinnengehäuse montiert und anschließend die Seitenplatten 6 und der Stützkern 5 der Stutzform montiert. Danach wird der Mischkopf 9 mit dem Auslaufrohr 10 in die Öffnung 8 der Bodenplatte 7 eingeführt und gegen die Einlaßöffnung 15 gedrückt.

Fig. 3 zeigt den Betriebszustand während des Einströmens der Reäktivmischung durch das Ventil in den Hohlraum. Fig. 5 zeigt einen Querschnitt senkrecht zur Ventilachse durch das Ventil in der Ebene der Einlaßöffnung 15. Die dargestellten Stromlinien erläutern die 2-fache Umlenkung der Strömung, bevor die Reaktivmischung in den Hohlraum 2 eintritt. Fig. 4 zeigt schließlich den Betriebszustand des erfindungsgemäßen Ventils nach Beendigung des Einlasses der verschäumbaren Mischung und Aufschäumen der Mischung. Der Mischkopf 9 ist von der Einlaßöffnung 15 zurückgefahren und die Kugel 16 hat die Einlaßöffnung 15 verschlossen.

Ein wesentliches Problem der Einleitung der verschäumbaren Reaktivmischung ist die Ausbildung von Strömungstoträumen im Einlaßorgan. Völlig überraschend war, daß durch die außeraxiale Positionierung der Verschlußkugel 16 aufgrund der Wölbung 17 keine durch Auftreten von Strömungstoträumen zu erwartenden Nachteile für den Schaum beobachtet werden. Offenbar wird die Kugel 16 in der außeraxialen Position durch die einlaufende Strömung der Reaktivmischung derart in Bewegung gehalten, daß sich wirksame Strömungstoträume, in denen ein vorzeitiges Aushärten der Reaktivmischung erfolgen könnte, nicht ausbilden.

## Patentansprüche

1. Ventil für den Verschluß auszuschäumender Hohlräume nach Einleiten einer verschäumbaren aus mindestens zwei Komponenten bestehenden Reaktivmischung mit folgenden Merkmalen:
a) das Ventil ist innerhalb des Hohlraumes angeordnet und steht in Kontakt mit mindestens einer der Begrenzungswände des Hohlraums;
b) das Ventil weist zwei im wesentlichen rotationssymmetrische koaxiale Käfige auf, wobei der innere Käfig eine axiale Öffnung zur Einleitung der Reaktivmischung und mindestens zwei radiale Öffnungen für den Durchtritt der Reaktivmischung in den zwischen innerem und äußerem Käfig gebildeten Ringraum aufweist;
c) der innere Käfig weist ferner eine in diesem frei bewegliche Kugel auf, die nach Beendigung des Einleitens der Reaktivmischung die Einleitöffnung verschließt;
d) auf der der Einleitöffnung gegenüberliegenden Seite weist der innere Käfig eine nach innen gerichtete Wölbung derart auf, daß die Kugel während des Einleitens der Reaktivmischung eine Position außerhalb der Käfigachse einnimmt;
und
e) der äußere Käfig weist radiale Durchtrittsöffnungen zum Hohlraum hin auf, wobei sich der freie Querschnitt von Eintrittsöffnung, Summe der Durchtrittsöffnungen des inneren Käfigs und Summe der Durchtrittsöffnungen des äußeren Käfigs jeweils mindestens verdoppelt.

2. Ventil nach Anspruch 1, wobei die Durchtrittsöffnungen des inneren Käfigs und des äußeren Käfigs so angeordnet sind, daß diese von der Reaktivmischung unter mindestens 2-facher Umlenkung durchströmt werden.

3. Ventil nach Anspruch 1 oder 2, wobei die Durchtrittsöffnungen des äußeren Käfigs in Form von Strömungskanälen ausgebildet sind, deren Länge in Strömungsrichtung mindestens deren kürzester Querschnittsabmessung entspricht.
